**Europäisches Patentamt**

**European Patent Office**

**Office européen des brevets**

(19)

(11) Veröffentlichungsnummer: **0 135 147 B1**

(12)

# EUROPÄISCHE PATENTSCHRIFT

(45) Veröffentlichungstag der Patentschrift:
01.04.87

(51) Int. Cl.⁴: **A 62 D 3/00, C 04 B 2/06**

(21) Anmeldenummer: **84109719.9**

(22) Anmeldetag: **16.08.84**

(54) Verfahren und Vorrichtung zur Herstellung eines trockenen, pulverförmigen Flugaschederivats und seine Verwendungen.

(30) Priorität: **29.12.83 DE 3347375**
**19.08.83 DE 3329972**

(43) Veröffentlichungstag der Anmeldung:
**27.03.85 Patentblatt 85/13**

(45) Bekanntmachung des Hinweises auf die Patenterteilung:
**01.04.87 Patentblatt 87/14**

(84) Benannte Vertragsstaaten:
**AT BE DE GB IT NL SE**

(56) Entgegenhaltungen:
**EP - A - 0 022 318**
**DE - B - 2 925 882**
**US - A - 2 230 761**

(73) Patentinhaber: **Gebr. Knauf Westdeutsche Gipswerke,
Am Bahnhof 6, D-8715 Iphofen (DE)**

(72) Erfinder: **Wirsching, Franz, Dr., In den Weinbergen 7,
D-8715 Iphofen (DE)**
Erfinder: **Poch, Wingolf, Dr., Wiesenweg 5,
D-8710 Kitzingen (DE)**
Erfinder: **Hüller, Rolf, Dr., Holzgasse 7, D-8715 Iphofen
(DE)**
Erfinder: **Hamm, Heiner, Dr., Schlesierstrasse 19,
D-8700 Würzburg (DE)**

(74) Vertreter: **Werner, Hans-Karsten, Dr. et al,
Deichmannhaus am Hauptbahnhof, D-5000 Köln 1 (DE)**

**Beschreibung**

Gegenstand der vorliegenden Erfindung ist ein Verfahren zur Herstellung eines trockenen, pulverförmigen Flugaschederivats aus calciumoxidhaltigen Flugaschen mit einem Gehalt von mindestens 3 Gew.-% freiem Calciumoxid durch Umsetzung mit überschüssigen Mengen Wasser oder wässrigen Suspensionen. Weiterhin betrifft die Erfindung eine bevorzugte Vorrichtung zur Durchführung des Verfahrens sowie Verwendungen des erfindungsgemäss erhältlichen Flugaschederivats.

Flugasche ist ein Nebenprodukt aller Verbrennungsanlagen von Kohlestaub und fällt in so erheblichen Mengen an, dass bisher nur geringe Teile der anfallenden Flugaschen sinnvoll weiterverwendet werden konnten. Die grössten Mengen an Flugaschen werden bisher noch deponiert. Sofern die Flugaschen hohe Anteile wasserlöslicher Salze, insbesondere wasserlösliche Sulfate enthalten, müssen die Flugaschen in einer Form deponiert werden, die weder das Grundwasser verunreinigt noch durch Wind Luftverunreinigungen verursacht.

Die in Braunkohle-Verbrennungsanlagen anfallende Flugasche bereitet bei der Deponierung besondere Schwierigkeiten, da sie wasserlösliche Salze enthält; vgl. Braunkohle, Heft 2, Februar 1981, S. 7-11. Zur Verringerung der Staubbelastung wurde die Flugasche vor der Verbringung angefeuchtet. Die hierbei partiell einsetzenden chemischen Reaktionen führten während des Transportes zu leicht verfestigten Agglomeraten, die jedoch auch nach der anschliessenden Verkippung durch einen Absetzer eine lockere Struktur behielten. Diese Aschedeponien waren wasserdurchlässig und führten bei späterem Kontakt mit Grundwasser zu einer Verunreinigung, insbesondere durch wasserlösliche Sulfate. Eine Verbesserung der Situation ist dadurch eingetreten, dass man die Asche unmittelbar vor der Verkippung mit 20 bis 40% Wasser bis zu einer breiartigen Konsistenz versetzt und dieses Gemisch durch Rütteln mit einem Vibrator verdichtet. Es entstehen so festere und weniger wasserdurchlässige Deponien.

Das in Braunkohle, Heft 2, beschriebene Verfahren ist jedoch nur so lange brauchbar, bis die Verbrennungsanlagen auf eine Entschwefelung mit Kalksteinsplitt umgestellt worden sind. Hierbei wird der Braunkohle vor der Verbrennung eine gewisse Menge Kalksteinsplitt beigemengt, welcher das gebildete $SO_2$ zu einem erheblichen Anteil bindet. Dieses Trocken-Additiv-Verfahren ist nicht nur für Neubauanlagen auf Braunkohlebasis sondern aufgrund des simplen Prinzips «Kalk zur Kohle» auch mit relativ geringem technischen Aufwand bei bestehenden Anlagen einsetzbar; vgl. VGB Kraftwerkstechnik 63 (1983) S. 327-331. Bei diesem Verfahren entsteht wegen des Überschusses an Kalkzusatz calciumoxidhaltige Flugasche. Derartige Flugasche mit einem relativ hohen Anteil an Calciumoxid führt bei der Zugabe von Wasser zu einer derartig heftigen Ablöschreaktion, dass die bisherige einfache Befeuchtung der Asche mit Wasser nicht mehr möglich ist. Auch bei der Deponierung verhält sich derartige Asche anders als die mit Wasser angerührte Flugasche der herkömmlichen Verbrennungsanlagen von Braunkohle.

In Steinkohle-Staubverbrennungsanlagen ist es bisher üblich gewesen, die Rauchgase durch Nasswaschverfahren zu reinigen und zu entschwefeln. Die dabei anfallenden Waschlaugen oder Schlämme sind gelegentlich auch mit der gleichzeitig anfallenden Flugasche vermischt und verwendet worden; vgl. DE-A 2400350, 3109879, 3113714, 3124003, 3117436, 3119422, 2357407 und EP-A 22318. In Zukunft ist damit zu rechnen, dass bei Steinkohleverbrennungsanlagen anstelle der Nassreinigung eine Entschwefelung durch Zugabe von Kalkstein zur Wirbelschicht stattfindet. Auch hierbei werden Flugaschen anfallen mit einem erhöhten Gehalt an Calciumoxid. Derartige Flugaschen verhalten sich bei der Umsetzung mit Wasser völlig anders, so dass die bisherigen Verwendungszwecke kaum noch in Frage kommen.

Die Erfindung hat sich die Aufgabe gestellt, Flugaschen mit einem höheren Calciumoxidgehalt sicher und einfach entweder deponierfähig oder wiederverwendungsfähig zu machen. Die Erfindung hat sich weiterhin die Aufgabe gestellt, ein umweltfreundlicheres Derivat von Flugasche herzustellen, welches anschliessend leicht und sicher weiterverarbeitet werden kann. Insbesondere hat sich die Erfindung die Aufgabe gestellt, ein trockenes und pulverförmiges Flugaschederivat aus calciumoxidhaltigen Flugaschen mit einem Gehalt von mindestens 3 Gew.-% freiem Calciumoxid herzustellen, wobei die Umsetzung mit Wasser oder wässrigen Suspensionen stattfinden soll. Um eine vollständige Ablöschung des Calciumoxids zum Calciumhydroxid zu erreichen, ist es dabei notwendig, stets mit überschüssigen Mengen Wasser oder wässriger Suspensionen zu arbeiten.

Diese Aufgabe kann überraschenderweise dadurch gelöst werden, dass die Reaktionszeit 0,5 bis 2 Stunden, die Reaktionstemperatur über 100°C beträgt und die überschüssige, nicht zur Ablöschung benötigte Wassermenge 120 bis 220 Mol.-% der zur Ablöschung erforderlichen Menge beträgt und so bemessen ist, dass sie durch die Reaktionswärme der Ablöschung vollständig verdampft und abgekühlt wird.

Vorzugsweise beträgt die Wassermenge 180 bis 200 Mol.-% der zur Ablöschung erforderlichen Menge. Im allgemeinen reicht eine Reaktionszeit von ca. 1 Stunde. Schwankungen der Reaktionszeit ergeben sich insbesondere aus der chemischen Zusammensetzung, der Korngrösse und der Porosität der eingesetzten Asche. Man wird daher die Reaktionszeit durch einfache Vorversuche optimieren können, wobei etwas zu lang gewählte Reaktionszeiten an sich nicht schaden, jedoch zu unnötigen Kosten führen. Zu kurze Reaktionszeiten können dazu führen, dass das Produkt noch gewisse Restmengen des nicht gelöschten Calciumoxids enthalten und daher bei der Weiterverarbeitung zu unerwünschten Nachreaktionen führen.

Um Verklumpungen und Verhärtungen des Flugaschederivats zu verhindern und nur trockenes, pulverförmiges Derivat zu erhalten, muss die Reaktionstemperatur über 100°C betragen.

Zur Durchführung des erfindungsgemässen Verfahrens werden die calciumoxidhaltige Flugasche mit Wasser oder wässrigen Suspensionen in einer Mischvorrichtung miteinander vermischt und danach in ein Reaktionsgefäss gefördert, in welchem das Gemisch 0,5 bis 2 Std. verweilt. Da die Reaktionstemperatur über 100°C betragen soll, muss insbesondere an den Wandungen des Reaktionsgefässes dafür gesorgt werden, dass die Temperatur nicht unter 100°C absinkt. Am einfachsten ist dies zu erreichen durch eine ausreichende Wärmeisolierung. Prinzipiell wäre es auch möglich, die Aussenwandung mit einem Heizmantel zu umgeben, jedoch ist dies wegen der damit verbundenen Kosten weniger bevorzugt.

Die Reaktionswärme der Ablöschreaktion reicht auch unter Berücksichtigung noch vorhandener Wärmeverluste an den Wandungen aus, bis zu 120 Mol.-% überschüssiges Wasser zu verdampfen. Bei einem zu geringen Wasserüberschuss kommt es zu lokalen Überhitzungen und damit zu unvollständiger Ablöschung des Calciumoxids. Bei zu grossem Wasserüberschuss besteht die Gefahr, dass lokal die Temperatur unter 100°C absinkt und es dabei zu unerwünschten Verklumpungen und irreversiblen Verhärtungen des Produktes kommt.

Das erfindungsgemäss erhaltene trockene, pulverförmige Flugaschederivat wird am anderen Ende des Reaktionsgefässes entnommen und gewünschtenfalls unmittelbar mit weiteren Zusätzen vermischt und weiterverarbeitet. Als weitere Zusätze kommen beispielsweise wässrige Suspensionen in Frage, die zusammen mit dem calciumhydroxidhaltigen Aschederivats zu deponierfähigen Produkten führen. Als wässrige Suspensionen können vorzugsweise die gleichen Suspensionen verwendet werden, die bereits zur Ablöschung des Calciumoxids benutzt wurden. Prinzipiell können aber auch alle anderen mit calciumhydroxidhaltigen Flugaschederivaten abbindenden Suspensionen von Abfallstoffen in dieser Form deponierfähig gemacht werden.

Als wässrige Suspensionen sowohl für die Ablöschung als auch für die weitere Vermischung zu einem deponierfähigen Produkt kommen ausser den üblichen Schlämmen von Nassreinigungsverfahren insbesondere wässrige Gipssuspensionen in Frage, wie sie im Hydrozyklonunterlauf einer zweistufigen nassen Rauchgasentschwefelungsanlage anfallen und die beispielsweise in Zement-Kalk-Gips Bauverlag 35 (1982, S. 313-317) beschrieben sind. Der Unterlauf der dort verwendeten Hydrozyklone besteht im allgemeinen aus einer ca. 50%igen Gipssuspension mit grossen kompakten Gipskristallen. Diese Gipssuspensionen sind zwar prinzipiell geeignet, zu hochwertigem Halbhydrat aufgearbeitet und zur Herstellung von Baustoffen verwendet zu werden. Da sie jedoch in Zukunft in grösseren Mengen anfallen werden, als sie für die Herstellung von Baustoffen benötigt werden, können sie zusammen mit dem erfindungsgemäss erhaltenen Flugaschederivat besonders gut und einfach deponierfähig gemacht werden. Ein besonderer Vorteil besteht darin, dass die Unterläufe der Hydrozyklone auch die übrigen Verunreinigungen der Rauchgaswäsche enthalten, so dass auch diese unmittelbar in geeigneter Form der Deponie zugeführt werden können. Hierbei handelt es sich in erster Linie um Chlorid, welches in Rauchgasen von Braunkohlen in erheblich geringeren Mengen vorhanden ist als in den Rauchgasen von Steinkohlekraftwerken. Trotzdem bietet sich hierdurch eine elegante Möglichkeit, durch Kombination von Trockenentschwefelung und Nassentschwefelung, die Rauchgase gleichzeitig auch von Chloriden zu befreien und diese zusammen mit den Reststoffen der Trockenentschwefelung und der Nassentschwefelung sicher, schnell und stabil zu deponieren. Diese Variante der Weiterverarbeitung ist Gegenstand der europäischen Patentanmeldung EP-A-0135148 (Priorität: 19.8.83; Anmeldetag: 16.8.84; Veröffentlichungstag: 27.3.85), in welcher aber auch bereits das vorliegende erfindungsgemässe Verfahren beschrieben ist. Ein besonderer Vorteil dieser Verfahrensvariante ist dabei der abwasserfreie Betrieb der Nassentschwefelung.

Weitere wässrige Suspensionen, die zusammen mit dem erfindungsgemäss erhaltenen Produkt deponiert oder weiterverarbeitet werden können, sind sulfithaltige Sulfat-Schlämme aus Rauchgasentschwefelungsanlagen sowie sonstige Abfallschlämme und Kraftwerkabwässer, die zusammen mit dem erfindungsgemäss hergestellten Flugaschederivat nach einiger Zeit abbinden und dadurch unschädlich deponiert werden können.

Es wurde weiterhin gefunden, dass das erfindungsgemäss erhältliche trockene, pulverförmige Flugaschederivat mit einem Calciumhydroxidgehalt von mindestens 4 Gew.-% auch ausgezeichnet geeignet ist als Komponente von Baumaterialien oder als Rohstoff für die Herstellung von Baustoffen verwendet zu werden. Dazu kann das Flugaschederivat beispielsweise noch heiss unmittelbar nach der Austragung aus dem Reaktionsgefäss mit den weiteren Komponenten in trockener Form vermischt und in dieser Form zur Weiterverarbeitung transportiert werden. Prinzipiell ist es aber auch möglich, das erfindungsgemäss erhältliche trockene und pulverförmige Flugaschederivat in reiner Form zu transportieren und zu lagern und erst bei Bedarf mit den weiteren Komponenten zu vermischen und zu verarbeiten.

Die weiteren Verwendungsmöglichkeiten hängen selbstverständlich in erheblichem Masse von der jeweiligen chemischen Zusammensetzung des trockenen und pulverförmigen Flugaschederivats ab. Die chemische Zusammensetzung wiederum hängt in erheblichem Masse von der jeweils eingesetzten Steinkohle bzw. Braunkohle ab, so dass sich die verschiedensten Verwendungsmöglichkeiten ergeben. Entscheidend ist erfindungsgemäss nur, dass die eingesetzte Flugasche mindestens 3% freies Calciumoxid aufweist, so dass das Flugaschederivat ca. 4 Gew.-% Calciumhydroxid enthält. Sofern in ausreichender räumlicher Nähe verschiedene Typen von Flugasche anfallen, von denen einige einen relativ hohen Calciumoxidgehalt und einige andere einen relativ niedrigen Calciumoxidgehalt aufweisen, so können diese auch vor der Ablöschreaktion miteinander vermischt und gemeinsam dem erfindungsgemässen Verfahren unterworfen werden. Sofern die calciumoxidarme Flugasche nur einen sehr niedrigen Gehalt an Calciumoxid aufweist, ist es prinzipiell auch möglich, diese mit dem erfindungsgemäss hergestellten Calciumhydroxid enthaltenden Derivat anschliessend zu vermischen und weiterzuverarbeiten. Erfindungsgemäss hergestellte Produkte mit relativ hohem Calciumoxidgehalt können mit entsprechenden Zuschlagstoffen zu Mörtel, Putzmaterialien aber auch vorgeformten Baustoffen wie Kalksandsteinen etc. weiterverarbeitet werden. Es ist auch möglich, dieses Material zum Verfüllen im Bergbau, zum Bau von Dämmen oder als Wirtschaftsgut für den Landschaftsbau zu verwenden.

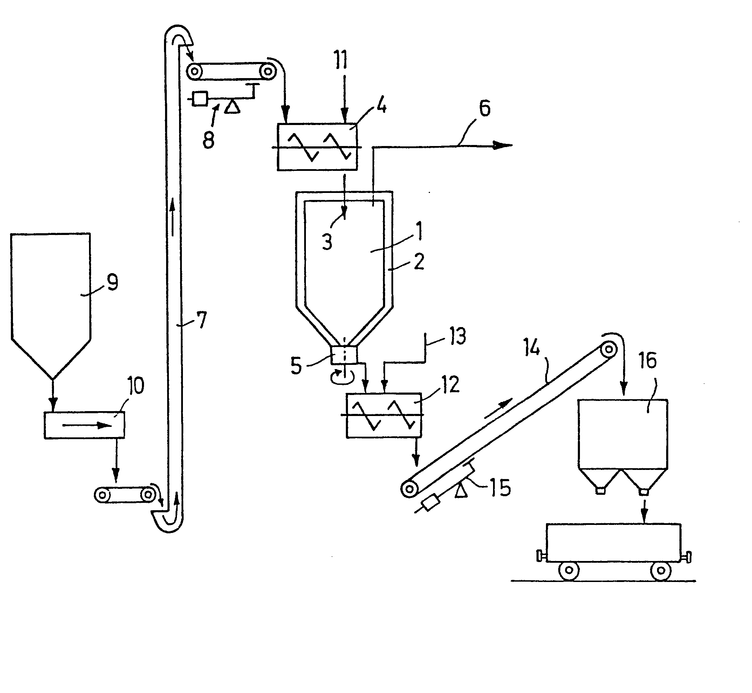

In der Figur ist eine erfindungsgemässe Vorrichtung zur Durchführung des Verfahrens näher erläutert. In dieser Figur bedeuten:

1) das Reaktionsgefäss;
2) die Wärmeisolierung der Wandungen;
3) die Einfüllöffnung für das Gemisch;
4) die Mischvorrichtung für Flugasche mit Wasser oder wässrigen Suspensionen;
5) die Austragsvorrichtung für das trockene, pulverförmige Flugaschederivat am Boden des Reaktionsgefässes;
6) der Brüdenabzug für verdampftes, überschüssiges Wasser;
7) eine Fördervorrichtung für Flugasche;
8) eine Bandwaage für Flugasche;
9) ein Flugaschesilo;
10) eine pneumatische Fördereinrichtung für Flugasche;
11) die Zuführungsleitung für Wasser oder wässrige Suspension zum Mischer;
12) ein Mischer für das fertige Flugaschederivat mit weiteren Komponenten;
13) die Zuführungsleitung für weitere Komponenten;
14) Förderband von der Mischanlage;
15) Bandwaage für das Endprodukt;
16) Verladesilo.

In dieser Vorrichtung wird Flugasche aus dem Flugaschesilo über (9) die pneumatische Förderung (10) und die Förderanlage (7) auf die Bandwaage (8) gefördert und dort in den Mischer (4) gegeben. Gleichzeitig wird über die Zuleitung (11) Wasser oder wässrige Suspension zudosiert. Das Gemisch wird durch die Einfüllöffnung (3) in das Reaktionsgefäss (1) gegeben, in welchem es allmählich von oben nach unten absinkt. Die Austragsvorrichtung (5) muss so reguliert sein, dass die Reaktionszeit 0,5 bis 2 Std., vorzugsweise 1 Std. beträgt. Die Reaktionszeit kann durch die Fördergeschwindigkeit der Austragsvorrichtung reguliert werden. Die zugeführte Menge an Gemisch durch die Einfüllöffnung (3) muss hierauf abgestimmt sein. Es ist möglich, die Reaktionszeit und damit die Dosierung und Entnahme automatisch zu regeln durch Messung der Reaktionstemperatur an der Aussenwandung. Die überschüssigen Wassermengen werden als Dampf durch den Brüdenabzug (6) entnommen und in geeigneter Weise weiterverwertet. Beispielsweise ist es möglich, die Brüden zu kondensieren und das Kondensat in den Prozess zurückzuführen. Sofern unmittelbar nach der Herstellung des Flugaschederivats dieses mit festen oder flüssigen weiteren Komponenten vermischt werden soll, geschieht dies in dem weiteren Mischer (12), welcher das so erhaltene Endprodukt über die Förderanlage (14) in das Ladesilo (16) transportiert.

Erfindungswesentlich für die Vorrichtung sind jedoch nur die Kombination aus der Mischvorrichtung (4), der Einfüllöffnung (3), dem Brüdenabzug (6), der Austragvorrichtung (5) und den wärmeisolierten Wandungen (2).

Das erfindungsgemässe Verfahren wird in dem nachfolgenden Beispiel näher erläutert:

### Beispiel 1

In einem Durchlaufmischer wird Flugasche mit einem Gehalt an freiem Calciumoxid von ca. 20%, die aus einem im Trocken-Additiv-Verfahren befeuerten Braunkohle-Kessel stammt, mit Wasser im Verhältnis 1:0,15 vermischt. Das Vermischungsprodukt erwärmt sich durch die Ablöschreaktion und wird zum Nachlöschen in einen wärmeisolierten Reaktionsbehälter transportiert, welcher einen Brüdenabzug und eine Austragsvorrichtung aufweist. Nach einer Reaktionszeit von ca. 1 Std. wird das Ablöschprodukt aus dem Behälter entnommen.

Um zu einem deponierfähigen Produkt zu kommen, wird das Ablöschprodukt unmittelbar im Verhältnis 1:0,25 mit weiterem Wasser vermischt. Man erhält so ein erdfeuchtes Produkt, welches in der Deponie mit den üblichen Verdichtungsgeräten maximal verdichtet wird. Proben des so erhaltenen Materials hatten folgende Werte:

Raumgewicht                            1,7 kp/dm$^3$;
7-Tage-Druckfestigkeit          3,5 MN/m$^2$;
28-Tage-Druckfestigkeit        11,5 MN/m$^2$;
28-Tage-Durchlässigkeitsbeiwert    $2 \times 10^{-9}$ m/s.

### Beispiel 2

In einem Durchlaufmischer wird Flugasche mit einem Gehalt an freiem Calciumoxid von ca. 20%, die aus einem im Trocken-Additiv-Verfahren befeuerten Braunkohle-Kessel stammt mit einer 50% Feststoff enthaltenden Gipssuspension im Verhältnis 1:0,3 vermischt. Die Gipssuspension stammt aus dem Hydrozyklonunterlauf einer 2stufigen Rauchgasentschwefelungsanlage. Die Suspension erwärmt sich durch die Ablöschreaktion und wird zum Nachlöschen in einen an den Wandungen wärmeisolierten Behälter transportiert, welcher einen Brüdenabzug aufweist. Nach einer Reaktionszeit von ca. 1 Std. wird das Ablöschprodukt aus dem Reaktionsgefäss ausgetragen und in einen weiteren Durchlaufmischer gegeben, in welchem es im Verhältnis 1:0,35 mit weiterer 50%iger Gipssuspension vermischt wird. Die Menge der Gipssuspension in der ersten Stufe ist so gewählt, dass keine Verklumpung auftritt, jedoch bereits praktisch vollständig abgelöscht ist. Die Menge der Gipssuspension in der zweiten Stufe ist durch Vorversuche so gewählt, dass das Produkt in der Deponie mit üblichen Verdichtungsgeräten maximal verdichtet werden kann. In der Deponie wird das Produkt in Schichtdicken von 25 bis 50 cm ausgebracht und dann jeweils mit den für feinteilige Schüttungen geeigneten Verdichtungsgeräten verdichtet. Proben des so erhaltenen Materials hatten folgende Werte:

| | |
|---|---|
| Raumgewicht | 1,7 kp/dm³; |
| 7-Tage-Druckfestigkeit | 2,5 MN/m²; |
| 28-Tage-Druckfestigkeit | 9 MN/m²; |
| 28-Tage-Durchlässigkeitsbeiwert | 6 × 10⁻⁹ m/s. |

**Patentansprüche**

1. Verfahren zur Herstellung eines trockenen, pulverförmigen Flugaschederivats aus calciumoxidhaltigen Flugaschen mit einem Gehalt von mindestens 3 Gew.-% freiem Calciumoxid durch Umsetzung mit überschüssigen Mengen Wasser oder wässrigen Suspensionen, dadurch gekennzeichnet, dass die Reaktionszeit 0,5 bis 2 Stunden, die Reaktionstemperatur über 100°C beträgt und die überschüssige, nicht zur Ablöschung benötigte Wassermenge 120 bis 220 Mol.-% der zur Ablöschung erforderlichen Menge beträgt und so bemessen ist, dass sie durch die Reaktionswärme der Ablöschung vollständig verdampft und abgeführt wird.

2. Verfahren gemäss Anspruch 1, dadurch gekennzeichnet, dass die Wassermenge 180 bis 200 Mol.-% der zur Ablöschung erforderlichen Menge beträgt.

3. Vorrichtung zur Durchführung des Verfahrens nach Ansprüchen 1 und 2, bestehend aus
a) einer Mischvorrichtung (4) für trockene Flugasche mit Wasser oder wässrigen Suspensionen,
b) einem Reaktionsgefäss (1) mit einer Einfüllöffnung (3) für das Gemisch aus der Mischvorrichtung (4), einem Brüdenabzug (6) für das verdampfte Wasser, einer Austragvorrichtung (5) für das trockene, pulverförmige Flugaschederivat am Boden des Reaktionsgefässes (1) sowie wärmeisolierten Wandungen (2).

4. Vorrichtung gemäss Anspruch 3, dadurch gekennzeichnet, dass das Reaktionsgefäss (1) zylindrokonisch ausgestaltet ist.

5. Verwendung eines trockenen, pulverförmigen Flugaschederivats mit einem Calciumhydroxidgehalt von mindestens 4 Gew.-%, erhältlich durch das Verfahren gemäss Ansprüchen 1 und 2 für
a) die Herstellung eines deponierfähigen Produktes durch Vermischen mit weiteren Mengen Wasser oder wässrigen Suspensionen sowie ggf. anschliessender Verdichtung, oder
b) als Komponente von Baumaterialien oder Rohstoff für die Herstellung von Baustoffen.

**Claims**

1. A process for preparing a dry, powdery fly ash derivative from calcium oxide-containing fly ashes having contents of at least 3% by weight of free calcium oxide by reaction with excessive amounts of water or aqueous suspensions, characterized in that the time of reaction is from 0.5 to 2 hours, the reaction temperature is above 100°C and the excessive amount of water not used for hydrating is from 120 to 220% by mole of the amount required for hydrating and is pre-determined to be such that it is completely evaporated and removed by the heat of reaction of the dehydration.

2. The process according to claim 1, characterized in that the amount of water is from 180 to 200% by mole of the amount required for hydrating.

3. An apparatus for carrying out the process according to claims 1 and 2 which apparatus consists of
a) a mixing device (4) for mixing dry fly ashes with water or aqueous suspensions;
b) a reaction vessel (1) having a feed opening (3) for supplying the mixture from the mixing device (4), a vapour hood (6) for the evaporated water, a discharging device (5) for the dry, powdery fly ashes derivative at the bottom of the reaction vessel (1) as well as heat-insulated walls (2).

4. The device according to claim 3, characterized in that the reaction vessel (1) is cylindro-conical in shape.

5. Use of a dry, powdery fly ash derivative having a calcium hydroxide content of at least 4% by weight, obtainable by the process according to claims 1 and 2,
a) for the production of a product suitable to be deposited by mixing with further amounts of water or aqueous suspensions and, if desired, subsequent compacting, or
b) as a component for construction materials or as a raw material for the production of building materials.

**Revendications**

1. Procédé de fabrication d'un dérivé de cendre volante pulvérulent et sec au départ de cendres volantes contenant de l'oxyde de calcium, avec une teneur en oxyde de calcium libre d'au moins 3% en poids, par réaction de quantités excédentaires d'eau ou de suspensions aqueuses, caractérisé en ce que la durée de la réaction varie de 0,5 à 2 heures, la température de la réaction est supérieure à 100°C et la proportion d'eau excédentaire, non nécessaire à l'extinction, atteint de 120 à 220% molaires de la quantité nécessaire à l'extinction et est mesurée de telle façon qu'elle s'évapore totalement sous l'effet de la chaleur réactionnelle de l'extinction en vue d'être évacuée.

2. Procédé suivant la revendication 1, caractérisé en ce que la proportion d'eau atteint de 180 à 200% molaires de la quantité nécessaire à l'extinction.

3. Installation pour la mise en oeuvre du procédé suivant les revendications 1 et 2, caractérisée en ce qu'elle se compose
a) d'un dispositif de mélange (4) de la cendre volante sèche à de l'eau ou des suspensions aqueuses,
b) d'un récipient de réaction (1) qui comporte une ouverture d'alimentation (3) en mélange provenant du dispositif de mélange (4), une conduite d'évacuation des vapeurs (6) pour l'évacuation de l'eau évaporée, un dispositif d'évacuation (5) du dérivé de cendre volante pulvérulent et sec au fond du récipient de réaction (1), comme aussi des parois thermiquement isolées (2).

4. Installation suivant la revendication 3, caractérisée en ce que le récipient de réaction (1) a une forme cylindro-conique.

5. Utilisation d'un dérivé de cendre volante sec et pulvérulent possédant une teneur en hydroxyde de calcium d'au moins 4% en poids, que l'on peut obtenir par mise en oeuvre du procédé suivant les revendications 1 et 2

a) en vue de la fabrication d'un produit susceptible d'être déversé dans une décharge, par mélange à des quantités complémentaires d'eau ou de suspensions aqueuses, et densification ou compaction éventuelle subséquente, ou

b) comme composante de matériaux de construction ou comme matière première pour la confection de matériaux de construction.